# EUROPEAN PATENT SPECIFICATION

(11) **EP 2 229 993 B1**
(45) Date of publication and mention of the grant of the patent: **18.01.2012**
(21) Application number: 10156240.3
(22) Date of filing: 11.03.2010
(51) Int. Cl.: B01D 39/16

(54) **Filter pad and method of manufacture**
Filterpad und Herstellungsverfahren dafür
Tampon filtreur et procédé de fabrication

(30) Priority: 20.03.2009 GB 0904768
(43) Date of publication of application: 22.09.2010
(73) Proprietor: Brentnall, Nicholas, Gloucestershire GL51 6QL (GB)
(72) Inventor: Brentnall, Nicholas, Gloucestershire GL51 6QL (GB)
(74) Representative: Jackson, Derek Charles

(56) References cited:
- US-A- 2 521 984
- US-A- 3 388 536
- US-A- 4 157 967
- US-A- 4 701 197

## Description

This invention relates to a filter pad of non-woven fibrous material and to a method of manufacturing such a filter pad.

It is common practice to manufacture filters of non-woven fibrous material by encasing peripheral regions of a filter pad in a frame formed around the filter pad by an injection moulding process, there being a seal between the periphery of the filter pad and the frame. The seal ensures that all of the fluid passes through the filter pad without by-passing the pad. The frame also provides support for the filter pad and improves handleability and durability thereof.

The injection moulding process relies on axial compression of peripheral regions of the filter pad so as to eliminate any lofted non-woven material and to allow the injection moulding tool to seal with the filter pad around the periphery thereof. Compressing the filter pad makes it less permeable and affects its performance, considerably so with relatively thick filter pads (for example having a thickness greater than about 10 mm). On the other hand, if the filter pad is not compressed the injection moulding process will simply inject the plastics frame material throughout the entire filter pad rendering the pad useless. Such a compression technique is known, for example, from WO-A-2005079951.

US-A-2521984 discloses a fibrous unit for use as a filter in vacuum cleaners in which an annular zone of a batt is subjected to pressure between two surfaces compressing the zone of the batt into a relatively thin rim and to a bonding treatment to permanently maintain the rim.

US-A-4701197 discloses a fluid filter element which comprises a filtering medium which includes a nonwoven batt having a marginal edge portion circumscribing the main body portion of the batt in which the fibres are stiffened to provide a support and sealing structure.

US-A-3388536 discloses a stabilised self-supporting filter having at least two layers of filter material and a support frame between the layers. The layers are secured together along the outer periphery of a first portion of the frame and the layers and a resilient third portion are secured at a second portion of the frame.

It is desirable to provide a filter pad and a method of manufacturing such a filter pad which inhibits absorption of frame material beyond the periphery of the filter pad without the need for compressing the peripheral region of the filter pad.

It is therefore an object of the present invention to provide a filter pad of non-woven fibrous material and a method of manufacturing such a filter pad which overcomes or at least ameliorates the disadvantages of known filter pads.

According to one aspect of the present invention there is provided a filter pad comprising a pad of non-woven fibrous material having a peripheral region in which opposing faces have been compressed together and fused so as to form an outwardly-extending peripheral lip with a transition region between opposing faces of the filter pad and the peripheral lip in which the surface of the filter pad extends in a substantially axial direction, wherein the surface of the filter pad is fused in the transition region.

The opposed surfaces of the filter pad may be fused in a further peripheral region of the filter pad located inwardly of the first-mentioned peripheral region.

According to another aspect of the present invention there is provided a method of manufacturing a filter pad comprising the steps of: providing a pad of non-woven fibrous material; compressing and heating a peripheral region of the pad so as to fuse the material of the pad and to form an outwardly extending peripheral lip; and forming a transition region between opposing faces of the filter pad and the peripheral lip in which the surface of the filter pad extends in a substantially axial direction, together with the step of fusing a surface of the filter pad in the transition region.

The method may include the further step of fusing opposed surfaces of the filterpad in a further peripheral region of the filter pad located inwardly of the first-mentioned peripheral region.

Opposing surfaces of the filter pad may be compressed or configured to determine the configuration of the edge region and/or peripheral surface of the filter pad.

The non-woven fibrous material may comprise a plastics material, such as polyester, polypropylene, nylon 6 or nylon 6/6.

The fibrous material may be heated substantially to its softening point. The softening point may be in the range from 20 to 30 degrees Celsius below the melting point to the melting point. For polyester material the fibrous material may be heated from substantially 235 to substantially 265 degrees Celsius, for polypropylene material the fibrous material may be heated from substantially 145 to substantially 165 degrees Celsius, for nylon 6 material the fibrous material may be heated from substantially 180 to substantially 210 degrees Celsius, and for nylon 6/6 material the fibrous material may be heated from substantially 245 to substantially 255 degrees Celsius.

For a better understanding of the present invention and to show more clearly how it may be carried into effect reference will now be made, by way of example, to the accompanying drawings in which:

Figure 1 is a perspective view of one embodiment of a known filter pad for use in the present invention;

Figure 2 is a perspective view of one embodiment of a filter pad according to the present invention;

Figure 3 is a perspective view showing a step in a method of manufacturing a filter pad according to the present invention;

Figure 4 is a perspective view showing another step in a method of manufacturing a filter pad according to the present invention;

Figure 5 is a perspective view showing a further step in a method of manufacturing a filter pad according to the present invention; and

Figure 6 is a cross-section view corresponding to Figure 5.

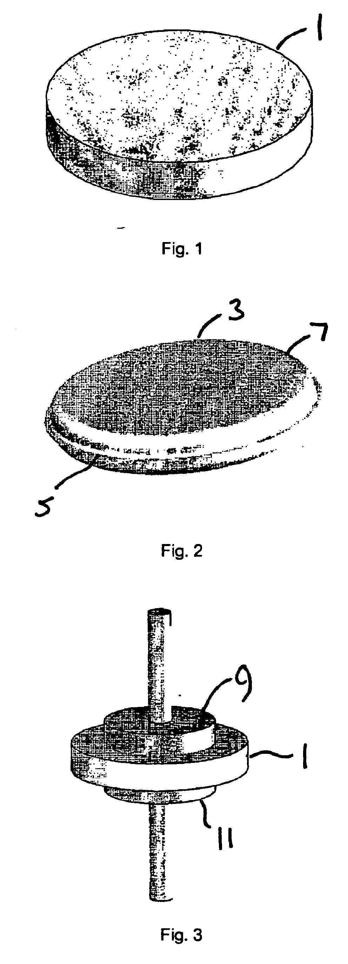

Figure 1 shows a conventional filter pad 1 of circular shape, although the pad could have other shapes. The filter pad 1 is made of a non-woven fibrous material, for example a plastics material such as polyester, polypropylene, nylon 6 or nylon 6/6.

Figure 2 shows a filter pad 3 according to the present invention which has been compressed around a peripheral region thereof and heated substantially to the softening temperature of the fibrous material so as to fuse together the fibres of the filter pad material in the peripheral portion to form an outwardly protruding lip 5 extending around the periphery of the filter pad. A transition region 7 between the lip 5 and a substantially planar face of the filter pad is abrupt so as to keep to a minimum the width of the peripheral region and to maximise the available surface area of the filter pad and correspondingly to maximise the performance of the resulting filter. The softening temperature may be in the range from 20 to 30 degrees below the melting temperature to the melting temperature of the material. For polyester material the fibrous material may be heated from substantially 235 to substantially 265 degrees Celsius, for polypropylene material the fibrous material may be heated from substantially 145 to substantially 165 degrees Celsius, for nylon 6 material the fibrous material may be heated from substantially 180 to substantially 210 degrees Celsius, and for nylon 6/6 material the fibrous material may be heated from substantially 245 to substantially 255 degrees Celsius.

There is a practical relationship between the time the filter pad is heated, the pressure applied to the pad and the temperature to which the fibres of the filter pad are heated. For example, a lower temperature requires more pressure and/or time, while a higher temperature requires lower pressure and/or shorter time. Such relationship can readily be determined for any particular material by routine tests not requiring any inventive activity.

In order to form a filter incorporating the filter pad according to the present invention, the filter pad 3 can be inserted into an injection moulding tool, or a resin casting mould, which seals against the lip 5 so as to mould a frame, leaving the remainder of the filter pad uncompressed.

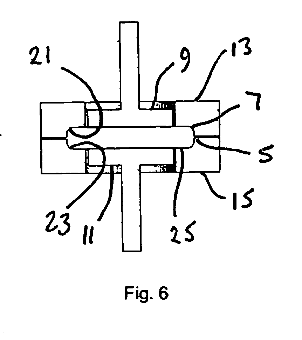

The filter pad 3 shown in Figures 3 and 6 may be manufactured by an apparatus which comprises means for supporting a pad 1, for example a pair of opposed support plates 9, 11 which are movable towards and away from each other in an axial direction of the filter pad 1 such that, when the plates 9, 11 are moved towards each other they lightly grip the pad 1 without compressing the same, and release the pad when moved away from each other. The support plates 9, 11 are dimensioned to leave a peripheral region of the filter pad 1 exposed.

Two pressure plates 13, 15 are provided, having a respective aperture 17, 19 dimensioned to accommodate a respective support plate 9, 11. The illustrated filter pad 1 is circular, so a circular aperture is required, but the filter pad may have other shapes and a correspondingly shaped aperture should be provided. The lower inner edge of the upper pressure plate 13 and the upper inner edge of the lower pressure plate 15 is formed with an annular recess 21, 23 which is substantially rectangular in cross-section, but with a rounded inner corner, and which engages the peripheral region of the filter pad 1 so as to form the transition region 7 with the extreme peripheral edge of the filter pad being gripped and compressed between opposing planar faces of the pressure plates 13, 15 so as to form the peripheral lip 5.

Each pressure plate 13, 15 is also provided with heating means, such as an electric heating element (not shown) which heats the pressure plate, or at least the region thereof adjacent to the peripheral region of the filter pad 1, to a temperature substantially corresponding to the melting temperature of the fibrous material.

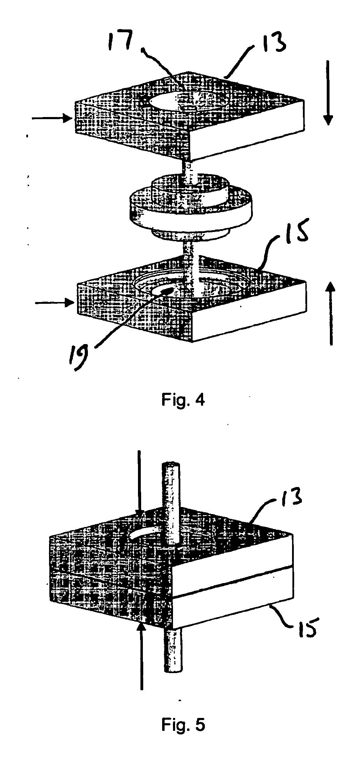

In use of the apparatus shown in Figures 3 to 6, the support plates 9, 11 are first moved apart and a filter pad 1 is placed substantially centrally on the lower support plate 9. The support plates are then moved together so as to lightly grip the filter pad 1. Once the filter pad has been lightly gripped, the heated pressure plates 13, 15 are moved together such that the recesses 21, 23 engage the peripheral region of the filter pad 1 while the opposing surfaces of the filter pad are urged towards each other in the peripheral region such that the extreme peripheral edge of the filter pad is compressed between opposing faces of the pressure plates. The heat of the pressure plates causes the fibres in the surface region of the fibrous material to fuse together and movement of the pressure plates 13, 15 towards each other draws down the peripheral region of the pad 1 towards the lip 5, forming the transition region 7 in which the fibres of the fibrous material are also fused together so as to form the filter pad 3 shown in Figures 2 and 6. The heated pressure plates 13, 15 also fuse opposed surfaces of the pad 1 in a further peripheral region 25 located radially inwardly of a first peripheral region formed by the lip 5 and the transition region 7.

The fused surface of the filter pad inhibits the entry into the interior of the filter pad 3 of the frame forming material in subsequent injection moulding or resin casting of a frame around the peripheral region of the filter pad 3. In addition, the moulding tool employed in either procedure is able to seal against the fused surface of the filter pad 3 and the escape of frame material between the tool and the filter pad 3 is prevented without the need for compressing the filter pad. Thus, the edge region of the filter pad can readily be over-moulded without degrading and/or compressing the edge of the filter pad and consequently without affecting the overall filter performance, such as dust loading and/or air permeability.

The manner in which the peripheral surface of the filter pad 3 is configured between the heated pressure plates 13, 15 may be adjusted in order to modify the edge region of the resulting filter. For example, the central region of the filter pad 1 may be compressed by the support plates 9, 11 to a degree greater than a light grip. Greater compression in the central region of the filter pad causes the peripheral wall to bulge outwardly and/or the upper and lower surfaces to be concave so that the angle between the top and bottom surfaces and the peripheral wall is other than 90 degrees and affects the configuration of the edge region following manufacture. Alternatively, the peripheral wall and/or the edge region of the top and bottom surfaces of the filter pad 3 may be cut to form an angle other than 90 degrees so as to have a similar effect on the configuration of the edge region following manufacture.

## Claims

1. A filter pad comprising a pad (1) of non-woven fibrous material having a peripheral region in which opposing faces have been compressed together and fused so as to form an outwardly-extending peripheral lip (5) with a transition region (7) between opposing faces of the filter pad (1) and the peripheral lip (5) in which the surface of the filter pad extends in a substantially axial direction, **characterised in that** the surface of the filter pad (1) is fused in the transition region (7) so as to inhibit the entry into the interior of the filter pad of the frame forming material in a subsequent injection moulding or resin casting of a frame around the peripheral region of the filter pad.

2. A filter pad as claimed in claim 1, wherein the opposed surfaces of the filter pad (1) are fused in a further peripheral region (25) of the filter pad located inwardly of the first-mentioned peripheral region.

3. A filter pad as claimed in claims 1 or 2, wherein the non-woven fibrous material comprises a plastics material.

4. A filter pad as claimed in claim 3, wherein the non-woven fibrous material is selected from polyester, polypropylene, nylon 6 and nylon 6/6.

5. A method of manufacturing a filter pad comprising the steps of:
providing a pad (1) of non-woven fibrous material;
compressing and heating a peripheral region of the pad so as to fuse the material of the pad and to form an outwardly extending peripheral lip (5); and
forming a transition region (7) between opposing faces of the filter pad (1) and the peripheral lip (5) in which the surface of the filter pad extends in a substantially axial direction,
**characterised by** fusing the surface of the filter pad (1) in the transition region (7) so as to inhibit the entry into the interior of the filter pad of the frame forming material in a subsequent injection moulding or resin casting of a frame around the peripheral region of the filter pad.

6. A method according to claim 5 and including the further step of fusing opposed surfaces of the filter pad (1) in a further peripheral region (25) of the filter pad located inwardly of the first-mentioned peripheral region.

7. A method according to claim 5 or 6, wherein opposing surfaces of the filter pad (1) are compressed or configured to determine the configuration of the edge region and/or peripheral surface of the filter pad.

8. A method according to any one of claims 5 to 7, wherein the non-woven fibrous material comprises a plastics material.

9. A method according to claim 8, wherein the non-woven fibrous material is selected from polyester, polypropylene, nylon 6 and nylon 6/6.

10. A method according to any one of claims 5 to 9, wherein the fibrous material is heated substantially to its softening point.

11. A method according to claim 10, wherein the softening point is in the range from 20 to 30 degrees Celsius below the melting point to the melting point.

## Patentansprüche

1. Filtermatte, die eine Matte (1) aus einem faserigen Vliesstoff mit einer Umfangsregion umfasst, bei der gegenüberliegende Flächen zusammengepresst und miteinander verschmolzen wurden, um eine außen verlaufende Umfangslippe (5) zu bilden, mit einer Übergangsregion (7) zwischen gegenüberliegenden Flächen der Filtermatte (1) und der Umfangslippe (5), wobei die Oberfläche der Filtermatte in einer im Wesentlichen axialen Richtung verläuft, **dadurch gekennzeichnet, dass** die Oberfläche der Filtermatte (1) in der Übergangsregion (7) verschmolzen wird, um ein Eintreten von rahmenbildendem Material in das Innere der Filtermatte bei einem nachfolgenden Spritzformen oder Harzgießen eines Rahmens um die Umfangsregion der Filtermatte zu verhindern.

2. Filtermatte nach Anspruch 1, wobei die gegenüberliegenden Flächen der Filtermatte (1) in einer weiteren Umfangsregion (25) der Filtermatte miteinander verschmolzen werden, die sich einwärts von der erstgenannten Umfangsregion befindet.

3. Filtermatte nach Anspruch 1 oder 2, wobei der faserige Vliesstoff ein Plastikmaterial umfasst.

4. Filtermatte nach Anspruch 3, wobei der faserige Vliesstoff aus Polyester, Polyproylen, Nylon 6 und Nylon 6/6 ausgewählt ist.

5. Verfahren zur Herstellung einer Filtermatte, das die folgenden Schritte beinhaltet:
Bereitstellen einer Matte (1) aus faserigem Vliesstoff;
Zusammenpressen und Erhitzen einer Umfangsregion der Matte, um das Material der Matte zu verschmelzen und eine außen verlaufende Umfangslippe (5) zu bilden; und
Ausbilden einer Übergangsregion (7) zwischen gegenüberliegenden Flächen der Filtermatte (1) und der Umfangslippe (5), in der die Oberfläche der Filtermatte in einer im Wesentlichen axialen Richtung verläuft,
**gekennzeichnet durch** Verschmelzen der Oberfläche der Filtermatte (1) in der Übergangsregion (7), um ein Eintreten von rahmenbildendem Material in das Innere der Filtermatte bei einem nachfolgenden Spritzformen oder Harzgießen eines Rahmens um die Umfangsregion der Filtermatte zu verhindern.

6. Verfahren nach Anspruch 5, das den weiteren Schritt des Verschmelzens gegenüberliegender Flächen der Filtermatte (1) in einer weiteren Umfangsregion (25) der Filtermatte beinhaltet, die sich einwärts von der erstgenannten Umfangsregion befindet.

7. Verfahren nach Anspruch 5 oder 6, wobei gegenüberliegende Flächen der Filtermatte (1) zusammengepresst oder konfiguriert werden, um die Konfiguration der Randregion und/oder der Umfangsfläche der Filtermatte zu ermitteln.

8. Verfahren nach einem der Ansprüche 5 bis 7, wobei der faserige Vliesstoff ein Plastikmaterial umfasst.

9. Verfahren nach Anspruch 8, wobei der faserige Vliesstoff aus Polyester, Polypropylen, Nylon 6 und Nylon 6/6 ausgewählt ist.

10. Verfahren nach einem der Ansprüche 5 bis 9, wobei der faserige Stoff im Wesentlichen bis auf seinen Erweichungspunkt erhitzt wird.

11. Verfahren nach Anspruch 10, wobei der Erweichungspunkt im Bereich von 20 bis 30 Grad Celsium unterhalb des Schmelzpunkts bis zum Schmelzpunkt liegt.

## Revendications

1. Tampon filtrant comprenant un tampon (1) de matériau fibreux non tissé ayant une zone périphérique dans laquelle les faces opposées ont été comprimées ensemble et assemblées par fusion de manière à former une lèvre périphérique (5) s'étendant vers l'extérieur avec une zone de transition (7) entre les faces opposées du tampon filtrant (1) et la lèvre périphérique (5) dans laquelle la surface du tampon filtrant s'étend dans une direction sensiblement axiale, **caractérisé en ce que** la surface du tampon filtrant (1) est fermée par fusion dans la zone de transition (7) de manière à interdire la pénétration à l'intérieur du tampon filtrant du matériau formant l'armature dans un moulage par injection ultérieur ou le moulage d'une résine d'une armature autour de la zone périphérique du tampon filtrant.

2. Tampon filtrant selon la revendication 1, dans lequel les surfaces opposées du tampon filtrant (1) sont assemblées par fusion dans une autre zone périphérique (25) du tampon filtrant située vers l'intérieur de la zone périphérique mentionnée en premier lieu.

3. Tampon filtrant selon la revendication 1 ou 2, dans lequel le matériau fibreux non tissé comprend une matière plastique.

4. Tampon filtrant selon la revendication 3, dans lequel le matériau fibreux non tissé est sélectionné entre le polyester, le polypropylène, le nylon 6 et le nylon 6/6.

5. Procédé de fabrication d'un tampon filtrant comprenant les étapes consistant à :
fournir un tampon (1) de matériau fibreux non tissé ;
comprimer et chauffer une zone périphérique du tampon de manière à assembler le matériau du tampon par fusion et à former une lèvre périphérique s'étendant vers l'extérieur (5) ; et
former une zone de transition (7) entre les faces opposées du tampon filtrant (1) et la lèvre périphérique (5) dans laquelle la surface le tampon filtrant s'étend dans une direction sensiblement axiale,
**caractérisé par** la fusion de la surface du tampon filtrant (1) dans la zone de transition (7) de manière à interdire la pénétration à l'intérieur du tampon filtrant du matériau formant l'armature dans un moulage par injection ultérieur ou le moulage d'une résine d'une armature autour de la zone périphérique du tampon filtrant.

6. Procédé selon la revendication 5, et comprenant l'étape supplémentaire de fusion des surfaces opposées du tampon filtrant (1) dans une autre zone périphérique (25) du tampon filtrant située vers l'intérieur de la zone périphérique mentionnée en premier lieu.

7. Procédé selon la revendication 5 ou 6, dans lequel les surfaces opposées du tampon filtrant (1) sont comprimées ou configurées pour déterminer la configuration de la zone de bordure et/ou de la surface périphérique du tampon filtrant

8. Procédé selon l'une quelconque des revendications 5 à 7, dans lequel le matériau fibreux non tissé comprend une matière plastique.

9. Procédé selon la revendication 8, dans lequel le matériau fibreux non tissé est sélectionné entre le polyester, le polypropylène, le nylon 6 et le nylon 6/6.

10. Procédé selon l'une quelconque des revendications 5 à 9, dans lequel le matériau fibreux est chauffé essentiellement jusqu'à son point de ramollissement.

11. Procédé selon la revendication 10, dans lequel le point de ramollissement est dans la plage comprise entre 20 à 30 degrés Celsius en dessous du point de fusion et le point de fusion.
